# EUROPEAN PATENT SPECIFICATION

(11) **EP 3 756 331 B1**
(45) Date of publication and mention of the grant of the patent: **28.07.2021**
(21) Application number: 19720748.3
(22) Date of filing: 16.04.2019
(51) Int. Cl.: H04L 29/06, H04L 29/08, G06Q 30/02

(54) **SELF-AUTHENTICATING DOMAIN SPECIFIC BROWSER IDENTIFIERS**
SELBSTAUTHENTIFIZIERENDE DOMÄNENSPEZIFISCHE BROWSER-IDENTIFIKATOREN
IDENTIFIANTS DE NAVIGATEUR SPÉCIFIQUES À UN DOMAINE D'AUTO-AUTHENTIFICATION

(43) Date of publication of application: 30.12.2020
(73) Proprietor: Google LLC, Mountain View, CA 94043 (US)
(72) Inventor: WANG, Gang, Mountain View California 94043 (US); GAO, Yian, Mountain View California 94043 (US); YUNG, Marcel, Mountain View California 94043 (US)
(74) Representative: Harden, Henry Simon
(86) International application number: PCT/US2019/027737
(87) International publication number: WO 2020/214157

(56) References cited:
- US-A1- 2011 055 552
- US-A1- 2015 339 734

## Description

### BACKGROUND

Browser cookies, or short device-, user-, or session-specific identifiers, are used for uniquely (or semi-uniquely) identifying a device, user, or session to a content provider. These cookies are typically generated by the content provider, e.g., during a first session or login process, and provided in subsequent requests from the browser or other application of the client device. The publisher can then associate each request with the same identifier (and implicitly, the same device, user, or session), allowing customization of content selection.

However, typical browser cookies have some critical drawbacks. Third-party content providers that provide embedded content within a website can provide cookies to track a browser, without the user necessarily being aware that they are being identified or tracked by these third parties (e.g., because the address shown in the browser address bar can only identify the source of the main page and not necessarily the embedded content). Thus, it can be difficult for users to identify potential privacy issues and control privacy of their personal information.

US 2015/339734 A1 discloses systems and methods for protecting consumer privacy in an online advertising environment. A request may be received from a browser for a webpage along with a unique browser identifier. The browser may be provided a first portion of the webpage that is locally available. The unique browser identifier may be provided to at least one advertising entity, wherein the advertising entity determines an advertisement based, at least in part, on the unique browser identifier. The advertisement may be received from the advertising entity, and provided to the browser as a second portion of the webpage.

US 2011/055552 A1 discloses that a client receives a notification of a user interaction with an information item and creates a record describing this interaction. The client encrypts the record using an encryption key associated with a server. The encrypted record is then communicated to at least one proxy, which in turn forwards the encrypted record to a server. Upon receiving the encrypted record from the proxy, a server decrypts the record using a decryption key and analyzes the decrypted record to identify the information item and the type of user interaction.

This information may be used individually or in aggregate for tracking user interests, billing advertisers or information item providers, and/or collecting anonymous information from users.

### SUMMARY

According to the invention, a system to control data exchange is provided as set out in claim 1.

According to the invention, a method to control data exchange is provided as set out in claim 8.

By replacing traditional browser cookies with encrypted content provider-specific identifiers, the user of the client device has greater control over private data, including data exchanges between partner content providers, with a transparent audit log that identifies any such exchanges. The encrypted content provider-specific identifiers additionally allow the client device to automatically control modification of content, and in particular to control whether particular third parties are permitted to modify content for display. Furthermore, by leveraging cookie generation and encryption on the client device, resource consumption from large cookie matching tables at content providers is avoided, increasing efficiency. The elimination of tracking pixels and dual-round trip communications for cookie matching also increases efficiency and better protects user privacy, allowing the client browser or application to render pages faster, with less battery and processor utilization.

### BRIEF DESCRIPTION OF THE DRAWINGS

The details of one or more implementations are set forth in the accompanying drawings and the description below. Other features, aspects, and advantages of the disclosure will become apparent from the description, the drawings, and the claims, in which:
FIG. 1 illustrates a block diagram of a network and device environment for data exchange, according to some implementations;
FIG. 2 illustrates a block diagram of implementations of computing devices for use in the network and device environment illustrated in FIG. 1, according to some implementations;
FIG. 3 illustrates a flow diagram for a client device to filter content requests, according to some implementations; and
FIGS. 4 and 5 illustrate flow charts of a method for data exchange with a self-enforcing permissions; according to some implementations.

Like reference numbers and designations in the various drawings indicate like elements.

### DETAILED DESCRIPTION

Browser cookies, or short device-, user-, or session-specific identifiers, are used for uniquely (or semi-uniquely) identifying a device, user, or session to a content provider, such as a webpage publisher, advertiser, or other such entity. These cookies are typically generated by the content provider or other devices during a first session or login process. The cookies can be provided in subsequent requests from the browser or other application of the client device. The publisher can then associate each request with the same identifier (and implicitly, the same device, user, or session), allowing customization of content selection.

However, typical browser cookies have some critical drawbacks. Third-party content providers that provide embedded content within a website can provide cookies to track a browser, without the user necessarily being aware that they are being identified or tracked by these third parties (e.g., because the address shown in the browser address bar can only identify the source of the main page and not necessarily the embedded content). Thus, it can be difficult for users to identify potential privacy issues and control privacy of their personal information. Privacy control can be technically difficult because it is technically challenging to enforce how data is controlled once provided to a second party. For example, the second party can share the data with a third party without consent from the original provider of the data.

The systems and methods described herein can increase user security and privacy while enabling customized content selection. Additionally, the current systems and methods can reduce the number of transmissions required to select or customize content to save bandwidth and other computational resources. The customization of content can be performed based on data from a plurality of different domains. Each of the domains can provide the client device with cookies that enable preferences of the client device to be stored and later retrieved. The preferences from a plurality of different domains can be used in the selection and customization of content. The systems and methods described herein can filter, limit, or prevent content requests. Filtering selected content requests to third parties enables a user to control customization of content by third parties. However, limiting the additional content requests saves transmission bandwidth and also increases user privacy.

The systems and methods discussed herein provide a replacement for traditional browser cookies with a secure, user-transparent, and highly efficient content provider-specific identifier, which can be referred to as a "read-only cookie" (ROC). The ROCs can be generated by the client device and encrypted with a public key of a third-party domain (e.g., a content provider). The encrypted ROCs can be referred to as eROCs. The encryption of the ROC prevents unintended third-party domains from reading the ROC.

The generation of the ROCs can be controlled by user policies, such that identifiers are only created for third parties with compliant terms of service (ToS) that are retrievable from a predetermined address within the third party's domain; third parties that are on a whitelist (e.g., for which the user has explicitly provided consent); and/or third parties that are not on a blacklist (e.g., for which the user has explicitly refused consent).

Once the ROC is generated, violations in ToS agreements can be difficult to detect. For example, a third party may have a valid ToS agreement; however, the third party may cache a second third party's ROC or eROC in violation of the ToS. In another example, a white-listed third party could share the ROC with a second third party that is listed on a blacklist. The present systems and methods can identify privacy violations and prevent subsequent ROC generation of violating third-party domains. Additionally, the systems and methods can prevent ROC generation for third parties that do not add to the selection of customized content, increasing the user's privacy.

For example, when selecting content for a client device, a content provider may interact with one or more partner domains. The partner domains can provide analytics or other data for the selection or customization of content. To request the data from the partner, under a ToS agreement, the content provider can be required to request permission to share data about the browser with the partner domains. The systems and methods described herein can provide a self-enforcing ROC that can provide an engineering-based enforcement of the ToS. The self-enforcing ROC can prevent, for example, content providers from caching the ROC for later use. The systems and methods described herein can generate eROCs that include one-time use authentication tokens. The authentication tokens can temporarily authorize data sharing between a content provider and partner domain.

When a content item is returned in response to a content request, the browser can audit the authentication tokens returned by the content provider with the content item. The browser can determine whether the content item was selected using cached ROCs, cached eROCs, or in violation of a ToS. If the content item fails the audit process, the browser can decide to not display the returned content.

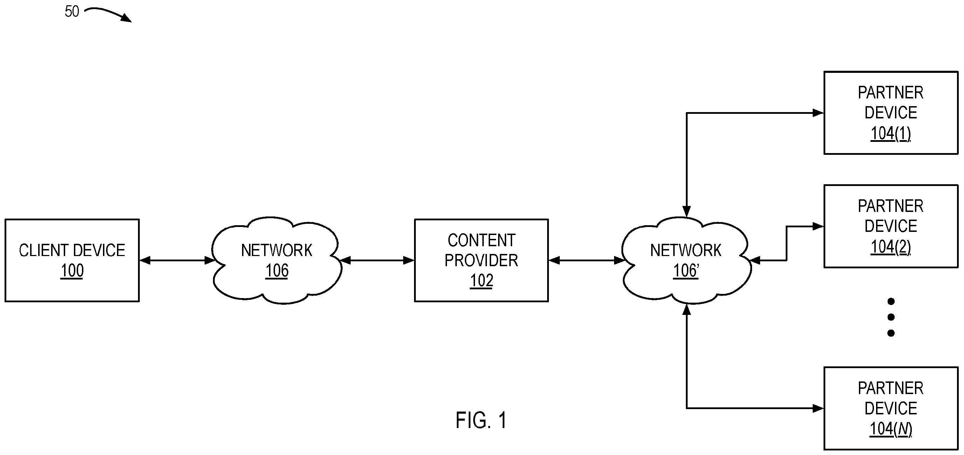

FIG. 1 illustrates a block diagram of a network and device environment 50 for data exchange, according to some implementations. As illustrated, a client device 100 can communicate via the networks 106, 106' with one or more content providers 102 and one or more partner devices 104(1)-104(*N*), which can generally be referred to as partner devices 104. The networks 106, 106' can collectively be referred to as the networks 106.

The network and device environment 50 can include one or more client devices 100. The client device 100 can include any type and form of computing device, including a desktop computer, laptop computer, portable computer, tablet computer, wearable computer, embedded computer, smart television, console, Internet of Things (IoT) device or smart appliance, or any other type and form of computing device. The client device 100 can execute an application to request content, such as a web browser, social media application, video game, or other such application. The client device 100 can request content and can provide a device identifier, cookie, or other such identifier such that a content provider 102 or partner device 104 can use to select customized content for the corresponding device or a user of the client device 100.

The network and device environment 50 can include one or more networks 106, 106'. The networks 106, 106' can include any type and form of network, including local area networks (LANs), wide area networks (WANs) such as the Internet, satellite networks, cable networks, broadband networks, fiber optic networks, microwave networks, cellular networks, wireless networks, or any combination of these or other such networks. The networks 106, 106' can be the same type of network or different types. The networks 106, 106' can be different portions of the same network. The networks 106, 106' can include a plurality of additional devices, including gateways, modems, firewalls, routers, switches, etc. The networks 106, 106' can also include any number of computing devices (e.g., computer, servers, routers, network switches, etc.) that are configured to receive and/or transmit data within the networks 106, 106'. The networks 106, 106' can include any number of hardwired and/or wireless connections. A client device 100 can communicate wirelessly (e.g., via Wi-Fi, cellular, radio, etc.) with a transceiver that is hardwired (e.g., via a fiber optic cable, a CAT5 cable, etc.) to other computing devices in the networks 106, 106'. In some implementations, the networks 106, 106' may be a virtual network, such as a virtual network between a plurality of virtual machines executed by a single physical machine, or an abstract network such as an offline transfer of data via physically movable media (e.g., a Sneakernet, transferring data via tape media, CD-ROM, flash media, external hard drives, floppy disks, etc.).

The network and device environment 50 can include one or more content providers 102. The content provider 102 can select content. The content provider 102 can select or receive the content from a pool of partner devices 104. For example, the content provider 102 can receive a request for content from the client device 100 and can select from among the partner devices 104 a partner device 104 to provide the requested content. The selection can be via load balancing algorithms, auction algorithms (e.g., with providers bidding for opportunities to provide content), etc. The content provider 102 can thus be referred to as an exchange server, a load balancer, an auction provider, or by any other such term. Although shown between networks 106, 106', the content provider 102 can be deployed on the same network segment as a partner device 104.

The network and device environment 50 can include one or more partner devices 104. The partner devices 104 can select content to provide to the client device 100, via the networks 106, 106', based on an identifier of the client device 100. The identifier can be one of the ROCs described herein. The partner devices 104 can also support the selection of content by the content provider 102 or other partner devices 104. For example, the partner devices 104 can provide analytics, preferences, content, and other information to the content provider 102 and other partner devices 104 that can enable the selection of customized or tailored content for the client device 100. The analytics, preferences, content, and other information that a partner device 104 provides to the content provider 102 or other partner devices 104 can generally be referred to generally as data.

The content provider 102 and the partner device 104 can utilize cookies, such as ROCs, to provide customized content to the client device 100. For example, when issuing a request for content, a client device 100 can provide a device identifier or cookie to the content provider 102. To maintain client privacy, the client device 100 can generate a private cookie, such as a ROC, for each of the content provider 102 and partner devices 104. To prevent caching of the cookie by the content provider 102, the partner devices' cookies can include a unique token that can only be extracted from the cookie by a respective partner device 104 or content provider 102. The unique token can be referred to as an authentication token. The authentication token can include random string of text or an encoded string. The encoded string can include a combination of a time stamp, public key, unique identifier, nonce, salt, domain identifier, or combination thereof. The partner device 104 can return the authentication token when returning data or content to the content provider 102. The authentication token is then forwarded to the client device 100 as proof that the data from the partner device 104 was selected in response to the present request and not generated in response to a cached cookie.

The content provider 102 and the partner devices 104 can include any type and form of computing device, including desktop computers, servers, workstations, laptop computers, portable computers, embedded computers, or any other type and form of computing device. The content provider 102 and the partner devices 104 can include virtual machines executed by one or more physical computing devices and can be configured as a server farm, cluster, or cloud of devices.

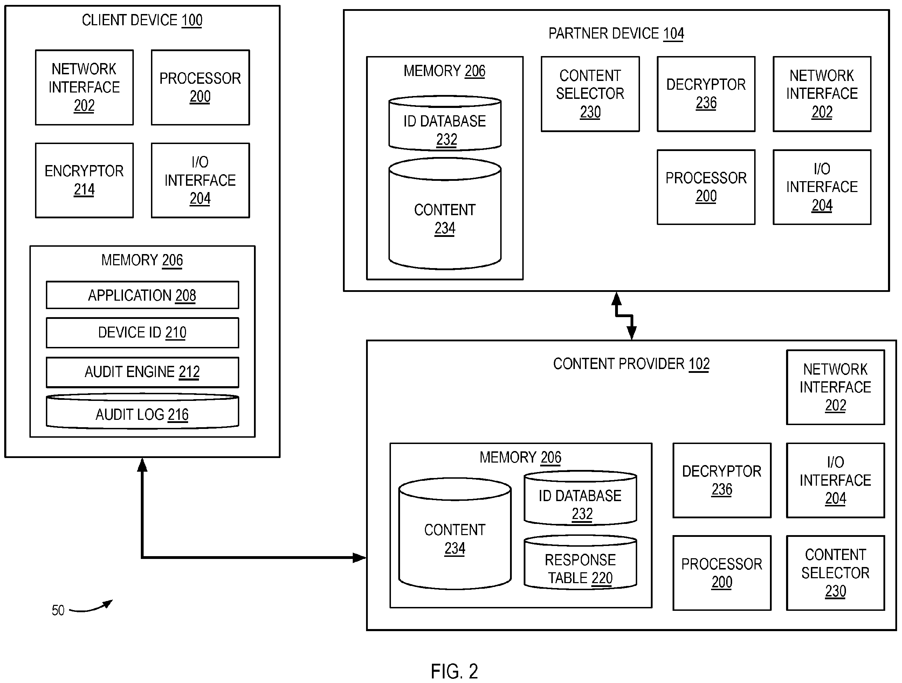

FIG. 2 illustrates a block diagram of implementations of computing devices for use in the network and device environment 50. As described above, the network and device environment 50 can include one or more client device 100 that can receive content via the content provider 102. The content provider 102 can receive the content or other data from one or more partner devices 104.

As discussed above, the client devices 100 can be referred to variously as a client, device, client device, computing device, user device, or any other such term and can be a desktop computer, laptop computer, tablet computer, smartphone, video game console, smart television or set top box, server, workstation, or any other type and form of computing device capable of communicating over a network 106. In some implementations, a client device 100 can execute an application, service, server, daemon, routine, or other executable logic for communicating over a network 106, such as a web browser, mail client, video player, music player, video game, or any other such application. Such applications can include a command line interface, graphical user interface, or any combination of these or other interfaces. In implementations in which a client device is a smart television or set top box, the client device can receive content via a first interface, such as a terrestrial, satellite, or cable broadcast, and can communicate with an audience measurement server via a second interface via network 106, such as an Ethernet or Wi-Fi interface. In other implementations, client device 100 can receive content via network 106 and can transmit identifications of interactions via network 106.

The client device 100 can be any number of different types of user electronic devices configured to communicate via network 106, including, without limitation, a laptop computer, a desktop computer, a tablet computer, a smartphone, a digital video recorder, a set-top box for a television, a video game console, or any other type and form of computing device or combinations of devices. In some implementations, the type of client device 100 can be categorized as a mobile device, a desktop device or a device intended to remain stationary or configured to primarily access network 106 via a local area network, or another category of electronic devices, such as a media consumption device.

The client device 100 can include a processor 200 and a memory 206. The memory 206 can store machine instructions that, when executed by the processor 200, cause the processor 200 to perform one or more of the operations described herein. The processor 200 can include a microprocessor, ASIC, FPGA, etc., or combinations thereof. The processor 200 can be a multicore processor or an array of processors. The memory 206 can include, but is not limited to, electronic, optical, magnetic, or any other storage devices capable of providing the processor 200 with program instructions. The memory 206 can include a floppy disk, CD-ROM, DVD, magnetic disk, memory chip, ROM, RAM, EEPROM, EPROM, flash memory, optical media, or any other suitable memory from which the processor 200 can read instructions. The instructions can include code from any suitable computer programming language, such as, but not limited to, C, C++, C#, Java, JavaScript, Perl, HTML, XML, Python, and Visual Basic.

The client device 100 can include one or more network interfaces 202. A network interface 202 can include any type and form of interface, including Ethernet, including 10BASE-T, 100BASE-T, or 1000BASE-T ("Gigabit"); any of the varieties of 802.11 wireless, such as 802.1 1a, 802.11b, 802.11g, 802.11n, or 802.11ac; cellular, including CDMA, LTE, 3G, or 4G cellular; Bluetooth or other short range wireless connections; or any combination of these or other interfaces for communicating with a network 106. The client device 100 can include a plurality of network interfaces 202 of different types, allowing for connections to a variety of networks 106 or a network 106 such as the Internet via different sub-networks.

The client device 100 can include one or more user I/O interfaces 204. The I/O interface 204 can be or can be connected to any electronic device that conveys data to a user by generating sensory information (e.g., a visualization on a display, one or more sounds, tactile feedback, etc.) and/or converts received sensory information from a user into electronic signals (e.g., a keyboard, a mouse, a pointing device, a touch screen display, a microphone, etc.) The one or more user interface devices can be internal to the housing of client device 100, such as a built-in display, touch screen, microphone, etc., or external to the housing of the client device 100, such as a monitor connected to the client device 100, a speaker connected to the client device 100, etc., according to various implementations.

The client device 100 can include, in memory 206, an application 208. The client device 100 can execute the application 208 with a processor 200. The application 208 can be an application, applet, script, service, daemon, routine, or other executable logic for receiving content and displaying or otherwise outputting content via the I/O interface 204 (e.g., display, speaker) of the client device. The application 208 can be a web browser. The application 208 can include functionality for displaying content received via network interface 202 and/or generated locally by processor 200. In some implementations, the application 208 can be a media player or include an embedded media player, such as a plug-in or native media player within a web browser.

The client 100 can include or be identified with a device identifier 210. The device identifier 210 can be an alphanumeric string, data string, serial number, media access control (MAC) address, internet protocol (IP) address, username or account name, globally unique identifier (GUID), cookie, random or pseudorandom number, or any other type and form of identifier, including combinations of these or other identifiers. In some implementations, the device identifier 210 can be fixed to the device or preconfigured in the device, such as a manufacturer serial number or MAC address. The device identifier 210 can be dynamically set by a content provider, streaming server, application 208, user, or other entity. For example, the device identifier can be set and stored in a cookie or username.

In some implementations, a unique or new device identifier 210 can be set for each communication with a content provider 102 or partner device 104. In some implementations, the device identifier 210 can be static, time-based (e.g., changed periodically-hourly, daily, weekly), or interval-based (e.g., changed on restart of the client device or login to a service).

In some implementations, a device identifier 210 can be associated with one or more other device identifiers 210 (e.g., a device identifier for a mobile device, a device identifier for a home computer, etc.) The device identifier 210 can be provided by the content provider 102 or the partner device 104. In some implementations, the client 100 can request a device identifier 210 from the content provider 102 or partner device 104 and can transmit the device identifier 210 to the content provider 102 or partner device 104 in association with requests for content or measurement data.

The client device 100 can include an encryptor 214. The encryptor 214 can be any application, applet, script, service, daemon, routine, or other executable logic to generate ROCs and eROCs. The encryptor 214 can be used to calculate hash results based on inputs. The hash results can be used in (or as) the ROCs and eROCs. The encryptor 214 can include hardware, software, or a combination of hardware and software. In some implementations, the encryptor 214 can include an encryption module, a trusted platform module (TPM), an ASIC, or any other type and form of circuitry for performing encryption and cryptographic hash calculations.

As described above, the client device 100 can replace a traditional browser cookie with a secure, user-transparent ROC. The encryptor 214 can generate the ROC. The encryptor 214 can then encrypt the ROC with a public key of the content provider 102, partner device 104, or other third party to form an encrypted ROC (eROC). The use of the eROC can prevent unintended parties using the identifier contained within the eROC. For example, only the owner of the private key associated with the public key can decrypt the eROC to access the identifier. Encrypting the ROC can enable the client device 100 to transmit eROCs destined for the partner devices 104 to the content provider 102, which can forward the eROCs to the respective partner devices 104. As the eROCs are not encrypted with the content provider's public key (but rather the public key of the partner devices 104), the content provider 102 cannot use or access the identifier contained within the eROCs destined for the partner devices 104.

The generation of content provider-specific identifiers may be controlled by user policies, such that identifiers are only created for content providers with compliant terms of service (ToS); from content providers that are on a whitelist (e.g., for which the user has explicitly provided consent); and/or from content providers that are not on a blacklist (e.g., for which the user has explicitly refused consent). In some implementations, a ToS can be compliant if retrievable from a predetermined address within a domain and the content of retrieved ToS is unchanged from the original ToS.

The encryptor 214 can generate the ROC and eROC using a cryptographic hash. The cryptographic hash can include any suitable hashing algorithm, such as MD5 and SHA256. The encryptor 214 can generate the ROC by hashing inputs that can include a browser-, application-, device-, or session-specific private identifier (e.g., an identifier specific to an instance of a browser for a particular user, separate from other users of the device) and a domain name or address of the recipient (e.g., the content provider 102 or partner device 104).

In some implementations, to provide additional salt, the hash input may also include a creation time or expiration time for the ROC. Other sources of entropy may be utilized to similarly increase the complexity of the hash inputs, such as device types or serial numbers, clock skew times, hardware identifiers, or any other such data. In some implementations, the "expiration time" may be a granular value, such as a number of weeks, months, or years before the content provider-specific identifier expires, allowing automatic regeneration by the client.

The encryptor 214 can generate an eROC by encrypting the ROC via a public key of the rightful owner or intended recipient (e.g., content provider 102 or partner device 104). The encryptor 214 can generate an eROC by first concatenating the ROC with a creation timestamp, a nonce, and encrypt the concatenation result with the public key of the recipient prior such that the resulting eROCs, even for a single domain, are highly varied.

The client device 100 can use the nonce as an authentication token. The encryptor 214 can generate a new authentication token each time the encryptor 214 generates an eROC. The encryptor 214 can generate the authentication token by concatenating the requesting domain, the recipient or partner domain, a timestamp, and a private identifier. The private identifier can be a domain-specific identifier. The encryptor 214 can encrypt the concatenated string to form the nonce. The encryptor 214 can encrypt the concatenated string with symmetric key encryption to form the nonce. The symmetric key encryption can include AES encryption or AES-based GCM encryption, among others. In some implementations, the intended recipient (e.g., the content provider 102 or the partner device 104) can decrypt and extract the private identifier and the authentication token. The content provider 102 or the partner device 104 can use the private identifier to select or customize content.

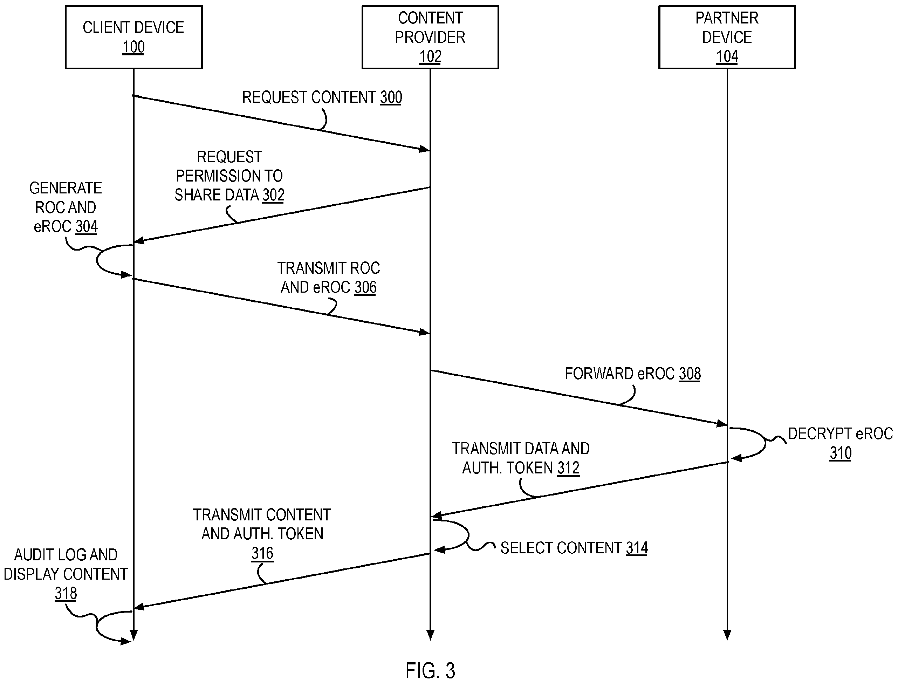

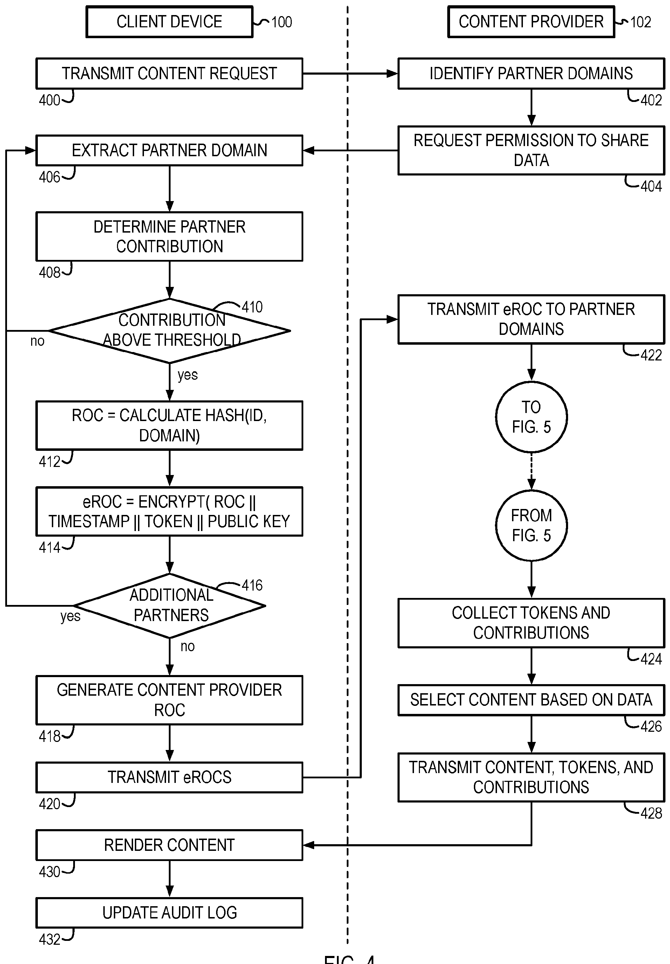

The client device 100 can include an audit log 216. The audit log 216 can be a database stored in the memory 206. As the encryptor 214 generates authentication tokens, the encryptor 214 can store each authentication token in a lookup table as a value of a key-value pair. The key for the key-value pair can be a request identifier. For example, in response to a content request, the client device 100 can receive a request from the content provider 102 to initiate data sharing with a plurality of partner devices 104. The encryptor 214 can generate an eROC for each of the partner devices 104 and store the authentication tokens in the audit log 216 as values keyed to the request identifier. As described in relation to FIGS. 3 and 4, among others, the audit engine 212 can audit the content request before displaying the returned content by determining whether each of the partner devices 104 returned the valid authentication token, as indicated by the audit engine 212 finding a match to the returned authentication token in the audit log 216. The audit log 216 can also include another lookup table that provides an indication of the partner devices' relative contribution in selecting the returned content. The audit engine 212 can save the indication of the contribution in association with an identifier of the partner device 104.

The client device 100 can execute an audit engine 212. The audit engine 212 can include an application, server, service, daemon, routine, or other executable logic for auditing the responses to returned content requests. The audit engine 212 can audit the audit log 216 to determine whether the content provider 102 or the partner device 104 are violating a ToS by, for example, caching the eROCs or ROCs.

As described above, responsive to sending a content request to the content provider 102, the content provider 102 can request permission to share information or data with one or more partner devices 104 for the selection or customization of the content. The client device 100 can approve the request by generating a respective eROC for each of the partner devices 104. Each eROC can include an authentication token, which the encryptor 214 can store in the audit log 216. The audit log 216 can include a plurality of rows. Each of the rows can include a randomly generated key, which can used as the authentication token. The data saved to each of the respective rows can be the data that is encoded with or in the authentication token. When the content provider 102 responds to the content request with a content item, the content provider 102 can forward the authentication token to the client device 100 from the partner device 104. As the eROC is encoded with the partner device's public key, only the partner device 104 (and not the content provider 102) can extract the authentication token from the eROC. The audit engine 212 can determine whether the authentication tokens are valid by accessing the audit log 216 and determining whether the authentication tokens correspond to the most recent content request. In some implementations, as described above, a timestamp can be included or embedded in the authentication token. The audit engine 212 can set a predetermined time out period for authentication tokens. If the timestamp of the returned authentication token is outside of the time out period, the audit engine 212 can determine that the authentication token is not valid. If the authentication token is not valid, indicating, for example, that the eROC was cached, the audit engine 212 can instruct the application 208 to not display the returned content. In some implementations, the authentication token can be "self-contained." For example, the authentication token can include the data required for the client device 100 (or other device) to authenticate the authentication token. For example, an indication of the request, partner domain, timestamp, or other data can be encrypted with a private key of the client device 100 and included in the authentication token. Upon receipt of the authentication token, the client device 100 can decrypt the authentication token to retrieve the encrypted data and use the decrypted data to authenticate the authentication token.

With the content, the content provider 102 can also transmit a data structure that includes the contribution of each partner device 104 in the selection of the content. The data structure can include a key-value pair indicating the contribution (value) of each partner device 104 (key). The contribution of a given partner device 104 to the selection of a content item can be negotiated between the partner device 104 and the content provider 102. After the partner device 104 is involved in a predetermined number of content requests, the audit engine 212 can calculate the average contribution of a partner device 104 to selecting or customizing content. Responsive to a future content request, the encryptor 214 may not generate an eROC for the partner device 104 if the partner device's contribution is below the predetermined threshold.

The network and device environment 50 can include a content provider 102. As with client devices 100, the content provider 102 can include one or more processors 200, memories or storage devices 206, network interfaces 202, and interfaces 204. In some implementations, the content provider 102 can be a headless server that does not include a user interface but can communicate with clients 100 or partner devices 104 via the network 106. In some implementations, memory 206 can store one or more applications for execution by processor 200 of the server, including FTP servers, web servers, mail servers, file sharing servers, peer to peer servers, or other such applications for delivering content or redirection commands to allow clients to access content at a content provider.

The content provider 102 can directly or indirectly select content response to a content request from the client device 100. For example, the content provider 102 can directly respond to the content request by selecting a content item from the content database 234 of the content provider 102. The content provider 102 can indirectly respond to the content request by forwarding the request to one or more partner devices 104 that can select the content or by receiving analytics and other data that enable the content provider 102 to select customized content.

The content provider 102 can select partner devices 104 from a list of partner devices. The content provider 102 can select the partner devices 104 via a round robin or other load balancing system or via an auction-based system. When one or more partner devices 104 are selected, the content provider 102 can transmit a request for permission to include the partner devices 104 in the selection of the requested content. In some implementations, the request can be included in webpage or other application where the content will be rendered. For example, the content slot where the content will be rendered can include a plurality of tags that identify partner devices 104 that will be used in the fulfilment of the content item. An indication of the partner devices 104 can be included in the header of the webpage. In response to the request for permission, the content provider 102 can receive, from the client device 100, an eROC for each partner device 104 that the client device 100 permits to be involved in the selection of the content item.

The content provider 102 can include a response table 220. The response table 220 can include a database, flat file, indexed file, or other type and form of data structure for storing authentication tokens received from the partner device 104. As described herein, the eROC can include an authentication token. When a partner device provides content or other data to the content provider 102, the partner device 104 can provide an instance of the authentication token to the content provider 102. The content provider 102 can store the authentication token into the response table 220. In association with the authentication token, the content provider 102 can also store an indication of the partner device's contribution to the selection of the content that the content provider 102 provides to the client device 100. When the content provider 102 provides the content to the client device 100, the content provider 102 can also provide an instance of the response table 220. The instance of the response table 220 transmitted to the client device 100 can include a key-value pair with the authentication token as the key and the partner device's contribution stored as the value in the response table 220.

Also as illustrated in FIG. 2, the network and device environment 50 can include one or more partner devices 104. A partner device 104 can include one or more computing devices connected to network 106 and configured to select or enable the selection of content in response to a content request. The partner devices 104 can provide the content item to the client device 100 directly or via the content provider 102. The partner device 104 can be a content provider, server, web server, data server, publisher, service provider, analytics system, or other such device. The partner device 104 can include a plurality of computing devices configured as a server farm or cloud and can include routers, load balancers, network address translators, firewalls, or other such devices. The partner devices 104 can be computer servers (e.g., FTP servers, file sharing servers, web servers, etc.) or combinations of servers (e.g., data centers, cloud computing platforms, etc.) The partner devices 104 can provide any type and form of content, including text, images, video, audio, multimedia, or other data, or any combination of these. Content can include live media content, prerecorded media content, rendered content, movies, television shows, podcasts, video blogs, video games or other interactive content, advertising in any format, social media, or any other type and form of content.

The partner devices 104 can include one or more processors 200, network interfaces 202, I/O interfaces 204, and/or memory devices 206. The partner devices 104 can include a plurality of computing devices, including virtual machines executed by physical devices. For example, a content provider 104 can comprise a plurality of virtual machines executed by one or more physical computing devices, each such virtual machine executing a partner device (e.g., web server, file server, streaming media server, etc.) and in communication with one or more storage devices, such as network storage devices, RAID storage devices, or other such devices.

The partner device 104 and the content provider 102 can include a content selector 230. Content selector 230 can include an application, service, server, daemon, routine, or other executable logic for selecting content from content storage 234 for delivery to a client device 100. The content selector 230 can select content for delivery to the client device 100 based on information about the client stored in an identifier database 232. For example, the database 232 can include information about the client device's capabilities (e.g., screen resolution or orientation, color depth, bandwidth, etc.) or any other such information for selection of customized content. The content stored in the database 232 can be index by ROC or a private identifier that is contained within, derived from, or otherwise associated with the ROC.

For example, upon receipt of an eROC from the client device 100, the content provider 102 and partner device 104 can decrypt the eROC to recover the ROC. The content selector 230 can identify the information about the client device 100 in database 232 via the ROC and select corresponding content from the content storage 234. The content selector 230 can push or stream the content to the client device 100, provide a unique resource identifier (URI) or address of content to the client device 100 such that the client application 208 can subsequently request the content for delivery and rendering (e.g., from a web server of content provider 104), or provide the URI or address to content provider 102 for forwarding to the client device.

The content storage 234 can be provided by one or more additional storage devices in communication with the content provider 102 or partner device 104. The content storage 234 can include any type and form of data, including audio, video, animations, text, multimedia, still or animated graphics, executable scripts, or any other type and form of content.

The identifier database 232 can include a database, flat file, indexed file, or other type and form of data structure for associating information about a client device, account, or session with a ROC or private identifier. The identifier database 232 can be stored in memory 206. The identifier database 232 can be stored separately and provided to content selector 230 (e.g., by a separate database server).

The content provider 102 and the partner device 104 can each include a decryptor 236. The decryptor 236 can be any application, applet, script, service, daemon, routine, or other executable logic to decrypt an eROC. The decryptor 236 can include software, hardware, or a combination of hardware and software for decrypting an eROC via a private key of the recipient of the eROC (e.g., a content provider 102 or partner device 104). The decryptor 236 can perform any suitable type of decryption algorithm and can include decryption circuitry such as an ASIC, a FPGA, a trusted platform module (TPM), or other such elements. The decryptor 236 can decrypt the eROC and extract the authentication token and other data from the decrypted ROC, such as the ROC.

FIG. 3 illustrates a flow diagram for a client device to self-enforce terms of service and filter content request. At step 300, a client device 100 can request an item of content. In some implementations, the request can be generated during rendering of a webpage, e.g., a request for embedded content in the page, such as a banner or other image, a media file such as a pre-roll, post-roll, or interstitial media file, or any other such content. In some implementations, the request can be for an unknown item of content, such that the content provider 102 or a partner device 104 can select an appropriate item of content. The request may, in some implementations, include a device identifier or other identifier of the client device, including a user name, account name, address or hardware identifier, or any other such information.

At step 302, the content provider 102 can request permission to share data with one or more selected partner devices 104. For example, responsive to receiving the request, the content provider 102 can select one or more partner devices 104 that can provide the content to the client device 100 or assist in providing the content to the client device 100. The selection of the partner devices 104 can be based on load balancing requirements, auction entrants, or any other such method. For example, the content provider 102 can communicate with partner devices 104 to request bids or other offers for an opportunity to provide the content to client device 100. In some implementations, the partner devices 104 can provide additional information or data that can enable or improve the selection of content for the client device 100. For example, the partner devices 104 can provide preferences or indications of interests on which the content can be selected or customized. In some implementations, employing the partner devices 104 in the selection of content for the client device 100 can require that the content provider 102 share information about the client device 100 with the partner devices 104. Before sharing information with the partner devices 104, the content provider 102 can request permission from the client device 100 to share the information with the partner devices 104. In some implementations, the request for permission can be embedded in the application or webpage into which the content will be rendered. For example, the request for permission can be in the header of a webpage or the content slot of a webpage as a plurality of tags that identify each of the partner devices 104 that are involved in providing the content. In these implementations, the content provider 102 may not send an explicit transmission to the client device 100 requesting permission (e.g., step 302) and the client device's approval of data sharing request embedded in the webpage can be included in the request for content (e.g., step 300). For example, the request for content at step 300 can also include the below-described transmission of the ROC and eROC (e.g., step 306).

The request for permission can include a domain, address, or other identifier of each selected partner device 104. In some implementations, the identifiers can have a predetermined length, such as 32 or 64 bytes, with shorter domains or addresses padded and longer domains truncated. The identifiers can then be concatenated directly, as the client device 100 can extract each identifier according to the predetermined length. In other implementations, the identifiers can be separated by delimiters (e.g., predetermined characters or strings).

At step 304, if the client device 100 approves the request to share data, the client device 100 can generate an encrypted eROC for each of the approved partner devices 104. For example, as described herein, the client device 100 can generate an eROC for each of the approved partner devices 104. The eROCs can be generated based on an identifier associated with each of the partner devices 104 and can include an authentication token. The eROC can include a private identifier (e.g., the ROC) that identifies the client device 100 to the partner device 104. The client device 100 can store, in the audit log, each authentication token in association with the partner device identification.

At step 306, the client device 100 can transmit the eROCs to the content provider 102. The client device 100 can transmit the eROCs to the content provider 102 in an HTTPs request. At step 308, the content provider 102 can forward a respective eROC to each of the respective partner devices 104. When forwarding the eROC to the partner devices 104, the transmission can include a request for content or a request for data to enable the selection of content.

At step 310, each partner device 104, upon receipt of the request and the eROC corresponding to the partner device 104, can decrypt the eROC using their private key to recover the ROC. Once the eROC is decrypted, the partner device 104 can extract the client device's private identifier and the authentication token. Based on the private identifier, the partner device 104 can select content for delivery to client device 100 or data that can be used in the selection of content. At step 312, the partner device 104 can transmit the data or content to the content provider 102.

At step 314, the content provider 102 can select content. The content provider 102 can select a content item from the plurality of content items provided by each of the different partner devices 104. The content provider 102 can select a content item based on preferences or other data provided by the partner devices 104. For example, a partner device 104 can provide an indication of the client device's computational capabilities, preferences of a user of the client device 100, or other data. In this example, the content provider 102 can select content that meets the user's preferences and can be rendered in accordance with the client device's computational capabilities.

As the content provider 102 receives content or data from the partner device 104, the content provider 102 can collect the authentication tokens that the partner devices 104 provide and the data transmitted from the partner devices 104. The content provider 102 can store the authentication tokens in a table in association with a content request identifier that corresponds to the current content request.

At step 316, the content provider 102 can transmit the content and collected authentication tokens to the client device 100. At step 318, the client device 100 can audit the returned authentication tokens and display the received content. The client device 100 can audit the authentication tokens prior to displaying or rendering the content. If the authentication tokens do not pass the audit, the client device 100 can refuse or decline to render the content. For example, the client device 100 can audit the authentication tokens to determine whether each of the returned authentication tokens are valid. A valid authentication token can indicate that the content provider 102 received permission to share data with a partner device 104. An invalid authentication token can indicate that the content provider 102 did not receive permission to share data with the partner device 104 and attempted, for example, to cache and reuse one or more eROCs or authentication tokens.

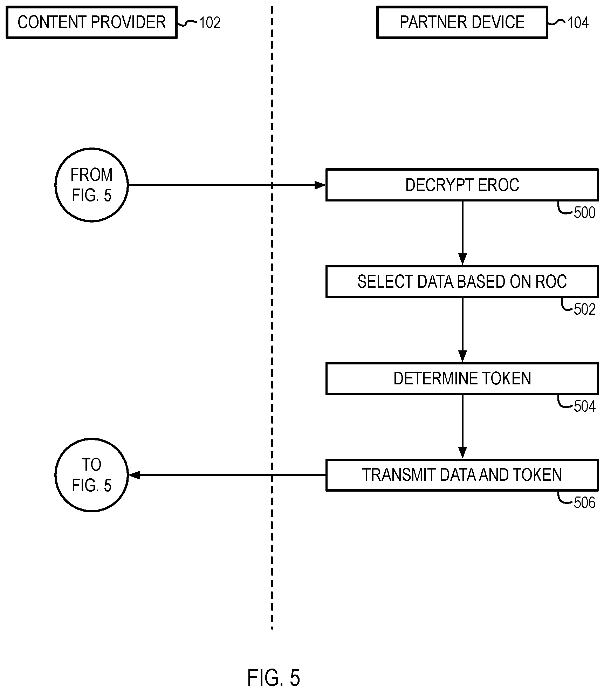

FIGS. 4 and 5 illustrate flow charts of a method for data exchange with self-enforcing permissions. Each flow chart is divided in part to show steps or procedures performed by the client device 100, content provider 102, and partner devices 104.

At step 400, the client device 100 can transmit a request for content to a content provider 102. An application on the client device 100, such as a web browser or media application, can generate the request for content. The application can generate the request during the rendering of a webpage or encountering a timed event during playback of another item of content. The request can be transmitted via any suitable transmission protocol (e.g., HTTPS request, RESTful request, etc.) and can include performing a handshaking procedure. The request can include a device identifier, account identifier, user identifier, session identifier, or other such identifier or a cookie generated by the client device (e.g., ROC) for the content provider 102 to uniquely identify the client device 100. For example, in some implementations, content provider 102 can have previously provided a cookie to client device 100 (e.g., during an authentication procedure or other such event), and client device 100 can provide the same cookie in the request thereafter.

At step 402, the content provider 102 can identify one or more partner devices 104 to potentially provide content to the client device 100 or to provide data for the selection of the content provided to the client device 100. The content provider 102 can select the partner devices 104 via any method, such as an auction system or round robin algorithm or other load balancing system. In some implementations, the partner devices 104 can be identified to the client device 100 in the webpage or application for which the content request was generated. For example, the list of partner devices 104 can be included in a plurality of tag parameters in a webpage or via a publicly-accessible partner file identified in the webpage.

At step 404, the content provider 102 can request permission to share data with the one or more partner devices 104 that were identified at step 402. The sharing of data with the partner devices 104 can include the content provider 102 sharing, for example, the above-described client identifier the content provider 102 received from the client device 100. In some implementations, each of the partner devices 104 may have previously exchanged a device identifier, account identifier, user identifier, session identifier, or other such identifier or a cookie with the client device 100. The previously shared identifier can be a ROC (or other identifier) that is unique between the client device 100 and respective partner device 104. For example, the client device 100 can store a different ROC for each of the partner devices 104. In some implementations, the request for permission to share data can include a request for the client device 100 to transmit the previously stored identifier to the partner device 104.

The permission request can include an identifier, such as a domain, that identifies the partner device 104 to the client device 100. For example, the content provider 102 can add the selected partner devices 104 to a list. Adding the partner device 104 can include adding a domain name or address of the partner device 104 to the list, concatenating the domain name or address to a set of names or addresses, or otherwise adding an identification of the partner device 104 to the list.

At step 406, the client device 100 can extract a first partner device 104 domain or address from the list that was received with the request to share data. As discussed above, the list can include fields of a predetermined length or variable length fields separated by delimiters. The client device 100 can extract a domain or address according to the length or delimiters, accordingly.

The client device 100 can determine whether permission should be given for data to be shared (by the content provider 102 or directly from the client device 100) with the partner device 104. As described above, the client device 100 can maintain an audit log that can include a list of whitelisted or blacklisted partner devices 104. The client device 100 can search the whitelisted or blacklisted partner devices 104 to determine whether data should be shared with the partner device 104. For example, if partner device's domain is included in a blacklist, the client device 100 can determine that data should not be shared with the partner device 104. The client device 100 can determine not to generate an eROC for the partner device 104 by returning to step 406 and identifying the next partner device 104 in the list provided by the content provider 102.

As described above, the audit log can include contribution information for each of the partner devices 104. The contribution information can indicate a partner device's contribution to the selection of previously provided content. For example, as described further in relation to step 428, when fulfilling a content request, the content provider 102 can provide an indication of the amount of contribution that each of the partner devices 104 provided in the selection of the content to fulfill the request. The level of contribution can be expressed, for each partner device 104, as a percentage. The summed percentage contribution of each of the partner devices 104 for fulfilling a content request can equal 100%. The level of contribution that a partner device 104 provides in fulfilling a content request can be determined based on an agreement between the content provider 102 and respective partner devices 104. For example, in exchange for data from a partner device 104 that enables the content provider 102 to customize the content provided to the client device 100, the content provider 102 can give the partner device 104 a 10% contribution. In some implementations, if the content provider 102 is provided a payment for providing the content, the payment can be split between each of the content provider 102 and partner devices 104 based on the level of contribution each played in selecting the content.

To determine the past contribution of the partner device 104, the client device 100 can calculate a contribution value for the partner device 104. The contribution value can be an average of the level of contribution the partner device 104 provided in selecting past content items. In some implementations, the contribution value can be calculated based on a time-limited or specific number of content fulfillments. For example, the contribution value may be based only on the content fulfillments in the last day, week, month, year, or other time frame. In another example, the contribution value may be based on the past N number of content fulfillments. The contribution value can be a weighted average. For example, the level of contribution from the most recent content fulfillments can be weighted higher than the contribution level from relatively older content fulfillments.

At step 410, the client device 100 can determine whether the calculated contribution value is above a predetermined threshold. If the contribution value is above the threshold, the client device 100 can proceed to step 412. If the contribution value is below the threshold, the client device 100 can return to step 406 and not generate an eROC for the currently identified partner device 104. The client device 100 can compare the calculated contribution value to the threshold to determine what effect the partner device 104 has on the selection and customization of the content. To enable the partner device 104 to provide input in the selection of content for the client device 100 some information is provided from (or about) the client device 100 to the partner device 104. To increase the privacy of the client device 100, the client device 100 can decide to not authorize data sharing with partner devices 104 that do not substantially affect the selection of content (e.g., has a contribution value less than the threshold). By not sharing data with the partner device 104 when the partner device 104 has a low contribution value, the client device 100 can protect the privacy of the client device 100 while not affecting the quality of the content that is selected for the client device 100. In some implementations, if the partner device 104 has not participated in the fulfilment of a content request prior to the request transmitted at step 400, the client device 100 can pass the partner domain to the generation of a ROC (e.g., step 412) even though the partner domain's contribution value is below the predetermined threshold. The client device 100 can provide a new partner domain with a grace period where the partner domain is authorized to participate in data sharing even when the partner domain's contribution value is below the predetermined threshold. The grace period can last a predetermined length of time (e.g., a day, week, or month) or a predetermined interval (e.g., for 10, 50, or 100 content requests).

If the client device 100 determines the contribution value is above the threshold, the client device 100 can calculate a ROC for the partner device 104. In some implementations, in place of or in addition to comparing the contribution value to the threshold, the client device 100 can determine whether the domain of the partner device 104 is on a whitelist or blacklist that indicates data sharing authorizations. For example, the client device 100 can include a whitelist of partner devices 104 with which the client device 100 has given authorization to share data irrespective of the partner device's contribution value. In another example, the client device 100 can include a domain of a partner device 104 on a blacklist, and permission may never be provided to share data with the partner device 104 irrespective of the partner device's contribution. In another example, the client device 100 may consider only whether an identifier associated with the partner device 104 is on a whitelist or blacklist and may not calculate the relative contribution of the partner device 104 when determining whether to permit data sharing with the partner device 104.

At step 412, having approved the sharing of data with the partner device 104, the client device 100 can generate a ROC for the partner device 104. To generate the ROC, the client device 100 can calculate a one-way secure crypto hash of a domain or address or other identifier of the partner device 104 and a private key or identifier of the client device 100. The identifier of the client device 100 can be a private identifier that between the client device 100 and the partner device 104 can identify the client device 100 to the partner device 104. For example, the private identifier can be a cookie or other identifier that was previously provided by the partner device 104 to the client device 100, such as, for example, when the client device 100 accessed a webpage on the domain of the partner device 104. Any suitable crypto hashing algorithm can be used. In some implementations, the client device 100 can store the ROC in the audit log. For example, the client device 100 can store or cache the ROC for a predetermined length of time to reduce computing resources needed for the cryptographic hashing. When the ROC is locally cached at the client device 100, the client device 100 can search the cache prior to generating a new ROC at step 412.

At step 414, the client device 100 can generate an eROC from the ROC generated at step 412. The client device 100 can generate the eROC by retrieving a public key of the partner device 104. The client device 100 can retrieve the key from a predetermined address (e.g., "[domain]/key.html") or from a key server. In some implementations, once the client device 100 receives the public key, the client device 100 can cache the key for a predetermined length of time for use in generating future eROCs for the partner device 104.

The client device 100 can generate the eROC by encrypting the ROC generated at step 412 with the partner device's public key. In some implementations, the client device 100 can concatenate the ROC with other data and encrypt the resulting character string to generate the eROC. For example, the client device 100 can concatenate the ROC, a timestamp, an authentication token, a public key, or any combination thereof to generate a character string.

The client device 100 can store the authentication token in an audit log. The authentication token can be stored in the audit log in association with the domain. In some implementations, the authentication token may be only valid for a predetermined length of time, and a timestamp or expiration time can be saved to the audit log in association with the authentication token to enable the client device 100 to determine whether the authentication token is valid when returned by a content provider 102 or partner device 104.

At step 416, the client device can determine if the list includes additional providers and, if so, can repeat steps 406-414.

After repeating steps 406-416 for each of the partner devices 104 in the list received from the content provider 102, the client device 100 exits the loop of steps 406-416 having generated an eROC for each of the partner devices 104 that the client device 100 approves of data being shared with. The client device 100 has also updated the audit log to include an indication of the authentication token generated for each of the partner devices 104.

At step 418, the client device 100 can generate a ROC for the content provider 102. The client device 100 can generate the ROC as described above in relation to the generation of a ROC for each of the partner devices 104. In some implementations, the client device 100 may not encrypt the ROC for the content provider 102, because the client device 100 will directly transmit the content provider's ROC to the content provider 102 in a secure communication channel. While, as illustrated in FIG. 3, the partner devices 104 can receive their ROCs via the content provider 102 as the content provider 102 receives the ROCs (as eROCs) from the client device 100 and forwards ROCs (which can be encrypted as eROCS by the client device 100) to each of the respective partner devices 104. As the content provider's ROC will be directly transmitted to the content provider 102, the client device 100 can save computational resources by not encrypting the content provider's ROC. The client device 100 can transmit the ROC to the content provider 102 (and the eROC to the content provider 102) over a secure channel, such as via an HTTPS request. In some implementations, after step 418, the client device 100 can encrypt the content provider's ROC to generate an eROC that is transmitted to the content provider 102.

As step 420, the client device 100 can transmit the set of eROCs to the content provider 102. At step 422, the content provider 102 can forward the eROCs to each of the respective partner devices 104.

At step 500, as illustrated in FIG. 5, the partner device 104 can decrypt the eROC. The partner device 104 can decrypt the eROC using the partner device's private key. Decrypting the eROC generates the character string used to generate the eROC at step 414. Each of the values (e.g., the ROC, timestamp, authentication token, and public key) can be of a known, fixed length or separated by a delimiter. The partner device 104 can extract each of the ROC, timestamp, authentication token, and public key based on the fixed length of the values or the delimiter.

At step 502, the partner device 104 can select data based on the ROC. As described above, the ROC can be or can include a private identifier between the client device 100 and the partner device 104 that identifies the client device 100 to the partner device 104. The partner device 104 can select an item of content for delivery to the client device 100 based on the ROC. The content item can be selected via any suitable means and can be personalized or customized for the client device 100. The content can be personalized based on information associated with the ROC in the local database of the partner device. For example, the information associated with the ROC can include information previously received from the client device 100 (e.g., preferences), web browsing or search histories associated with the client device 100, previous content requests or interactions, or any other type and form of information. In some implementations, in addition to or in place of selecting a content item, the partner device 104 can select information previously received from the client device 100 (e.g., preferences), web browsing or search histories associated with the client device 100, previous content requests or interactions, or any other type and form of information that is stored in association with the ROC in the internal database of the partner device 104. The partner device 104 can transmit the data to the content provider 102 or another partner device 104, which can select content based on the data.

At step 504, the partner device 104 can determine the authentication token. As described above, the authentication token can be included in the character string encrypted within the eROC. Once the eROC is decrypted to reveal the character string, the partner device 104 can extract the authentication token from the character string based on fixed lengths of the values within the character string and/or delimiters within the character string.

At step 506, the partner device 104 can transmit the authentication token and data, which can include a content item, to the content provider 102. In some implementations, when the data includes a content item, the data transmitted to the content provider 102 can include a bid for displaying or providing the content item to the client device 100.

Returning to FIG. 4, at step 424, the content provider 102 can collect the authentication tokens and relative contributions from each of the partner devices 104 in selecting the content item. For example, the content provider 102 can include an internal database of content items from which the content provider 102 selects the content for responding to the client device's content request. The content provider 102 may have received preferences of the client device 100 from each of four different partner devices 104. With the preference information, the content provider 102 can receive the authentication token from each of the partner devices 104 providing the preference information. The content provider 102 can collect each of the authentication tokens and store the authentication tokens in a table in association with the relative contribution of each of the partner devices 104. For example, the table for the four partner devices 104 can be an array, such as [(token1, 5), (token2, 5), (token3, 7), (token4, 2)], indicating that the partner device 104 associated with token1 contributed 5%, the partner device 104 associated with token2 contributed 5%, the partner device 104 associated with token3 contributed 7%, and the partner device 104 associated with token4 contributed 2% to the selection of the content item. In this example, the content provider 102 may have been 81% (100%-5%-5%-7%-2%) responsible for the selection of the content item. The total contribution can be 100% such that the content provider 102 is responsible for the contribution not provided for by one of the partner devices 104. In some implementations, the content provider 102 can determine the contribution of each partner device 104 by searching a contribution table stored at the content provider 102. In some implementations, prior to a partner device 104 providing data to the content provider 102, the content provider 102 and the partner device 104 can agree on a contribution score the partner device 104 will receive when providing the content provider 102 data (or content) in the furtherance of content selection. The agreed upon contribution score can be stored in the contribution table.

At step 428, the content provider 102 can transmit the content item, authentication tokens, and relative contributions to the client device 100.

At step 430, the client device 100 can render the received content. In some implementations, the client device 100 can audit the returned authentication tokens before rendering the content. The client device 100 can use each of the returned authentication tokens as a key to look up the authentication token in the audit log. If the authentication token is expired, associated with a different content request, or not located in the audit log, the client device 100 can determine that the authentication token is invalid. For example, in violation of a ToS, the content provider 102 may have cached the eROC or authentication token of a partner device 104 such that the content provider 102 could share data with the partner device 104 without first asking permission of the client device 100. In this example, when the content provider 102 cached the authentication token, the client device 100 could determine that the authentication token has expired and is invalid. In some implementations, if one or more of the authentication tokens returned to the client device 100 at step 428 are invalid, the client device 100 can decide to not render the content.

At step 432, the client device 100 can update the audit log. Updating the audit log can include adding an entry for the just completed content request. The entry can include updating the overall or running contribution score for each of the partner devices 104 based on the contribution score transmitted to the client device 100 at step 428. In some implementations, updating the audit log can include adding to a blacklist an identifier of the content provider 102 or partner device 104 if any of the respective content provider's or partner devices' authentication tokens were determined to be invalid.

According to the invention, a system to control data exchange includes a content provider and an encryptor. The encryptor, for each partner domain in a list of partner domains, generates a partner domain-specific identifier and encrypts the partner domain-specific identifier and a first authentication token using an encryption key of the corresponding partner domain. The partner domain-specific identifier can be, or can include, an indication of the partner domain's domain (e.g.,. example.com) or a hash of thereof. The partner domain-specific identifier can be assigned to the partner domain by the system as a randomly generated, sequentially generated, or other type of identifier. The system, which includes a network interface, transmits to a content provider the encrypted partner domain-specific identifiers and the encrypted first authentication tokens for each partner domain in the list of partner domains. The network interface receives, from the content provider, a content item selected by the content provider based on data from each partner domain in the list of partner domains. The data from each partner domain in the list of partner domains is selected based on receiving the encrypted partner domain-specific identifier. For example, the partner domain can decrypt the encrypted partner domain-specific identifier and use the partner domain-specific identifier as a key in a lookup table to identify data associated with the partner domain-specific identifier. The network interface receives, by the client device from the content provider, a second authentication token for each partner domain in the list of partner domains. The system includes an audit engine to decide to display the content item based on a comparison of the first authentication token for each partner domain in the list of partner domains and the second authentication token for each partner domain in the list of partner domains. For example, the audit engine can display the content item if the first and the second authentication token match.

In some implementations, the audit engine is configured to decide to display the content item based on the comparison which further comprises matching each of the first authentication token for each partner domain in the list of partner domains with one of the second authentication tokens for each partner domain in the list of partner domains. The audit engine can also be configured to determine a contribution score for the second partner domain. The contribution score can indicate a level of contribution in selecting a second content item. The audit engine can decide to not generate a partner domain-specific identifier for the second partner domain based on the contribution score being less than a predetermined threshold. The contribution score can indicate a level of contribution in selecting one or more prior content items.

In some implementations, the encryptor can generate a first authentication token for each domain partner in a second list of partner domains. The network interface can receive, from the content provider, a second content item selected by the content provider based on data from each partner domain in the second list of partner domains. The network interface can also receive, from the content provider, a second authentication token for each domain partner in the second list of partner domains. The audit engine can decide to not display the second content item based on not matching the first authentication token for each domain partner in the second list of partner domains with a respective one of the second authentication token for each domain partner in the second list of partner domains.

The encryptor can be configured to generate the partner-specific identifier by calculating a cryptographic hash of a client device identifier and a domain name of the corresponding partner domain. The client device identifier can be unique for each of the partner domains in the list of partner domains. To encrypt the partner domain-specific identifier, the encryptor is configured to generate a character string by concatenating at least the partner domain-specific identifier, the first authentication token, and a timestamp. The encryptor can then encrypt the character string.

In some implementations, the encryptor can be configured to generate the partner domain-specific identifier based on the partner domain not being listed in a blacklist. The encryptor can be configured to generate the partner domain-specific identifier based on a contribution score of the partner domain being above a predetermined threshold.

According to the invention, a method to control data exchange includes receiving, by a client device from a content provider, a list of partner domains. The method includes, for each partner domain in the list of partner domains, generating, by the client device, a partner domain-specific identifier and encrypting, by the client device, the partner domain-specific identifier and a first authentication token using an encryption key of the corresponding partner domain. The method includes transmitting, by the client device to the content provider, the encrypted partner domain-specific identifiers and the encrypted first authentication tokens for each partner domain in the list of partner domains. The method includes receiving, by the client device from the content provider, a content item selected by the content provider based on data from each partner domain in the list of partner domains. The data from each partner domain in the list of partner domains is selected based on receiving the encrypted partner domain-specific identifier. The method includes receiving, by the client device from the content provider, a second authentication token for each partner domain in the list of partner domains. The method includes displaying, by the client device, the content item based on a comparison of the first authentication token for each partner domain in the list of partner domains and the second authentication token for each partner domain in the list of partner domains.

In some implementations, the method can include displaying the content item based on the comparison and further comprises matching each of the first authentication token for each partner domain in the list of partner domains with one of the second authentication tokens for each partner domain in the list of partner domains.

The method can include receiving, by the client device, a second partner domain. The method can include determining, by the client device, a contribution score for the second partner domain. The contribution score indicates a level of contribution in selecting a second content item. The method can include deciding, by the client device, to not generate a partner domain-specific identifier for the second partner domain based on the contribution score being less than a predetermined threshold. The contribution score can indicate a level of contribution in selecting one or more prior content items.

In some implementations, the method can include receiving, by the client device, a second list of partner domains. The method can include generating, by the client device, a first authentication token for each domain partner in the second list of partner domains. The method can include receiving, by the client device from the content provider, a second content item selected by the content provider based on data from each partner domain in the second list of partner domains. The method can include receiving, by the client device from the content provider, a second authentication token for each domain partner in the second list of partner domains. The method can include deciding, by the client device, to not display the second content item based on not matching the first authentication token for each domain partner in the second list of partner domains with a respective one of the second authentication token for each domain partner in the second list of partner domains.

In some implementations, generating the partner-specific identifier can include calculating a cryptographic hash of a client device identifier and a domain name of the corresponding partner domain. The client device identifier can be unique for each of the partner domains in the list of partner domains. Encrypting the partner domain-specific identifier can include generating a character string by concatenating at least the partner domain-specific identifier, the first authentication token, and a timestamp. The method can include encrypting the character string. The method can include generating the partner domain-specific identifier based on the partner domain not being listed in a blacklist. The method can include generating the partner domain-specific identifier based on a contribution score of the partner domain being above a predetermined threshold.

The operations described in this specification can be implemented as operations performed by a data processing apparatus on data stored on one or more computer-readable storage devices or received from other sources.

The term "client" or "server" includes all kinds of apparatus, devices, and machines for processing data, such as a programmable processor, a computer, a system on a chip or multiple chips, or combinations of the foregoing. The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing, and grid computing infrastructures.

A computer program (also known as a program, software, software application, script, or code) can be written in any form of programming language, including compiled or interpreted languages and declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform actions by operating on input data and generating output. The processes and logic flows can also be performed by, and apparatuses can also be implemented as, special purpose logic circuitry, e.g., an FPGA (field programmable gate array) or an ASIC (application specific integrated circuit).

Processors suitable for the execution of a computer program include both general and special purpose microprocessors and any one or more processors of any kind of digital computer. Generally, a processor will receive instructions and data from a read-only memory or a random access memory or both. The essential elements of a computer are a processor for performing actions in accordance with instructions and one or more memory devices for storing instructions and data. Generally, a computer will also include, or be operatively coupled to receive data from or transfer data to, or both, one or more mass storage devices for storing data, e.g., magnetic disks, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), to name just a few. Devices suitable for storing computer program instructions and data include all forms of non-volatile memory, media, and memory devices, including semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, implementations of the subject matter described in this specification can be implemented on a computer having a display device, e.g., a CRT (cathode ray tube), LCD (liquid crystal display), OLED (organic light emitting diode), TFT (thin-film transistor), plasma display, other flexible configuration, or any other monitor for displaying information to the user and a keyboard, a pointing device, e.g., a mouse, trackball, etc., or a touch screen, touch pad, etc., by which the user can provide input to the computer. Other kinds of devices can be used to provide for interaction with a user as well; feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user or by sending webpages to a web browser on a user's client device in response to requests received from the web browser.

Implementations of the subject matter described in this specification can be implemented in a computing system that includes a back-end component, e.g., a data server, or that includes a middleware component, e.g., an application server, or that includes a front-end component, e.g., a client computer having a graphical user interface or a Web browser through which a user can interact with an implementation of the subject matter described in this specification, or any combination of one or more such back-end, middleware, or front-end components. The components of the system can be interconnected by any form or medium of digital data communication, e.g., a communication network. Communication networks can include a local area network ("LAN"), a wide area network ("WAN"), an inter-network (e.g., the Internet), and peer-to-peer networks (e.g., ad hoc peer-to-peer networks).

For situations in which the systems discussed herein collect personal information about users, or can make use of personal information, the users can be provided with an opportunity to control whether programs or features can collect personal information (e.g., information about a user's social network, social actions, or activities, a user's preferences, or a user's location) or to control whether or how to receive content from a partner device or other data processing system that can be more relevant to the user. In addition, certain data can be anonymized in one or more ways before it is stored or used, so that personally identifiable information is removed when generating parameters. For example, a user's identity can be anonymized so that no personally identifiable information can be determined for the user, or a user's geographic location can be generalized where location information is obtained (such as to a city, postal code, or state level), so that a particular location of a user cannot be determined. Thus, the user can have control over how information is collected about him or her and used by the partner device.

While operations are depicted in the drawings in a particular order, this should not be understood as requiring that such operations be performed in the particular order shown or in sequential order, or that all illustrated operations be performed, to achieve desirable results. In certain circumstances, multitasking and parallel processing can be advantageous. Moreover, the separation of various system components in the implementations described above should not be understood as requiring such separation in all implementations, and it should be understood that the described program components and systems can generally be integrated together in a single software product or packaged into multiple software products.

The invention is defined by the following claims.

## Claims

1. A system to control data exchange, comprising:
a content provider (102);
an encryptor (214) to, for each partner domain in a list of partner domains:
generate a partner domain-specific identifier; and
encrypt the partner domain-specific identifier and a first authentication token using an encryption key of the corresponding partner domain;
a network interface (202) to:
transmit to the content provider the encrypted partner domain-specific identifiers and the encrypted first authentication tokens for each partner domain in the list of partner domains;
receive, from the content provider, a content item selected by the content provider based on data from each partner domain in the list of partner domains, wherein the data from each partner domain in the list of partner domains is selected based on receiving the encrypted partner domain-specific identifier;
receive, from the content provider, a second authentication token for each partner domain in the list of partner domains; and
an audit engine (212) to determine to display the content item based on a comparison of the first authentication token for each partner domain in the list of partner domains and the second authentication token for each partner domain in the list of partner domains.

2. The system of claim 1, wherein the audit engine (212) determining to display the content item based on the comparison further comprises matching each of the first authentication token for each partner domain in the list of partner domains with one of the second authentication tokens for each partner domain in the list of partner domains.

3. The system of claim 1 or 2, further comprising the audit engine (212) to:
determine a contribution score for a second partner domain, wherein the contribution score indicates a level of contribution in selecting a second content item; and
determine to not generate a partner domain-specific identifier for the second partner domain based on the contribution score being less than a predetermined threshold, and optionally wherein the contribution score indicates a level of contribution in selecting one or more prior content items.

4. The system of any preceding claim, further comprising:
the encryptor (214) to generate a first authentication token for each domain partner in a second list of partner domains;
the network interface (202)to:
receive, from the content provider, a second content item selected by the content provider based on data from each partner domain in the second list of partner domains;
receive, from the content provider, a second authentication token for each domain partner in the second list of partner domains; and
the audit engine (212) to determine to not display the second content item based on not matching the first authentication token for each domain partner in the second list of partner domains with a respective one of the second authentication token for each domain partner in the second list of partner domains.

5. The system of any preceding claim, wherein the encryptor (214) is configured to generate the partner-specific identifier by calculating a cryptographic hash of a client device identifier and a domain name of the corresponding partner domain, and optionally wherein the client device identifier is unique for each of the partner domains in the list of partner domains.

6. The system of any preceding claim, wherein to encrypt the partner domain-specific identifier, the encryptor (214) is configured to:
generate a character string by concatenating at least the partner domain-specific identifier, the first authentication token, and a timestamp; and
encrypt the character string.

7. The system of any preceding claim, wherein the encryptor (214) is configured to generate the partner domain-specific identifier based on the partner domain not being listed in a blacklist, or wherein the encryptor is configured to generate the partner domain-specific identifier based on a contribution score of the partner domain being above a predetermined threshold.

8. A method to control data exchange, comprising:
receiving, by a client device (100) from a content provider (102), a list of partner domains;
for each partner domain in the list of partner domains:
generating (304), by the client device, a partner domain-specific identifier; and
encrypting (304), by the client device, the partner domain-specific identifier and
a first authentication token using an encryption key of the corresponding partner domain;
transmitting (306), by the client device to the content provider, the encrypted partner domain-specific identifiers and the encrypted first authentication tokens for each partner domain in the list of partner domains;
receiving (316), by the client device from the content provider, a content item selected by the content provider based on data from each partner domain in the list of partner domains, wherein the data from each partner domain in the list of partner domains is selected based on receiving the encrypted partner domain-specific identifier;
receiving (316), by the client device from the content provider, a second authentication token for each partner domain in the list of partner domains; and
displaying (318), by the client device, the content item based an authentication of the second authentication token for each partner domain in the list of partner domains.

9. The method of claim 8, wherein displaying the content item based on the comparison further comprises matching each of the first authentication token for each partner domain in the list of partner domains with one of the second authentication tokens for each partner domain in the list of partner domains.

10. The method of claim 8 or 9, further comprising:
receiving, by the client device (100), a second partner domain;
determining, by the client device, a contribution score for the second partner domain, wherein the contribution score indicates a level of contribution in selecting a second content item; and
determining, by the client device, to not generate a partner domain-specific identifier for the second partner domain based on the contribution score being less than a predetermined threshold, and optionally wherein the contribution score indicates a level of contribution in selecting one or more prior content items.

11. The method of any one of claims 8 to 10, further comprising:
receiving, by the client device (100), a second list of partner domains;
generating, by the client device, a first authentication token for each domain partner in the second list of partner domains;
receiving, by the client device from the content provider (102), a second content item selected by the content provider based on data from each partner domain in the second list of partner domains;
receiving, by the client device from the content provider, a second authentication token for each domain partner in the second list of partner domains; and
determining, by the client device, to not display the second content item based on not matching the first authentication token for each domain partner in the second list of partner domains with a respective one of the second authentication token for each domain partner in the second list of partner domains.

12. The method of any one of claims 8 to 11, wherein generating the partner-specific identifier comprises calculating a cryptographic hash of a client device identifier and a domain name of the corresponding partner domain, and optionally wherein the client device identifier is unique for each of the partner domains in the list of partner domains.

13. The method of any one of claims 8 to 12, wherein encrypting the partner domain-specific identifier comprises:
generating a character string by concatenating at least the partner domain-specific identifier, the first authentication token, and a timestamp; and
encrypting the character string.

14. The method of any one of claims 8 to 13, further comprising generating the partner domain-specific identifier based on the partner domain not being listed in a blacklist.

15. The method of any one of claims 8 to 14, further comprising generating the partner domain-specific identifier based on a contribution score of the partner domain being above a predetermined threshold.

## Patentansprüche

1. System zur Steuerung des Datenaustauschs, umfassend:
einen Inhaltsanbieter (102);
einen Verschlüsseler (214) für Folgendes für jede Partnerdomäne in einer Liste von Partnerdomänen:
Erzeugen einer domänenspezifischen Partnerkennung; und
Verschlüsseln der domänenspezifischen Partnerkennung und eines ersten Authentifizierungstokens unter Verwendung eines Verschlüsselungsschlüssels der entsprechenden Partnerdomäne;
eine Netzwerkschnittstelle (202) für Folgendes:
Übertragen der verschlüsselten domänenspezifischen Partnerkennungen und der verschlüsselten ersten Authentifizierungstoken für jede Partnerdomäne in der Liste von Partnerdomänen an den Inhaltsanbieter;
Empfangen, von dem Inhaltsanbieter, eines Inhaltselements ausgewählt durch den Inhaltsanbieter basierend auf Daten von jeder Partnerdomäne in der Liste von Partnerdomänen, wobei die Daten von jeder Partnerdomäne in der Liste von Partnerdomänen basierend auf dem Empfangen der verschlüsselten domänenspezifischen Partnerkennung ausgewählt werden;
Empfangen, von dem Inhaltsanbieter, eines zweiten Authentifizierungstokens für jede Partnerdomäne in der Liste von Partnerdomänen; und
eine Prüfmaschine (212) zum Bestimmen, das Inhaltselement basierend auf einem Vergleich des ersten Authentifizierungstokens für jede Partnerdomäne in der Liste von Partnerdomänen und des zweiten Authentifizierungstokens für jede Partnerdomäne in der Liste von Partnerdomänen anzuzeigen.

2. System nach Anspruch 1, wobei die Prüfmaschine (212), die bestimmt, das Inhaltselement basierend auf dem Vergleich anzuzeigen, ferner das Zuordnen jedes der ersten Authentifizierungstoken für jede Partnerdomäne in der Liste von Partnerdomänen zu einem der zweiten Authentifizierungstoken für jede Partnerdomäne in der Liste von Partnerdomänen umfasst.

3. System nach Anspruch 1 oder 2, ferner umfassend die Prüfmaschine (212) für Folgendes:
Bestimmen einer Beitragsbewertung für eine zweite Partnerdomäne, wobei die Beitragsbewertung eine Beitragshöhe beim Auswählen eines zweiten Inhaltselements angibt; und
Bestimmen, keine domänenspezifische Partnerkennung für die zweite Partnerdomäne zu erzeugen, basierend darauf, dass die Beitragsbewertung kleiner als ein vorbestimmter Schwellenwert ist, und wobei optional die Beitragsbewertung eine Beitragshöhe beim Auswählen eines oder mehrerer früherer Inhaltselemente angibt.

4. Verfahren nach einem vorhergehenden Anspruch, ferner umfassend:
dass der Verschlüsseler (214) einen ersten Authentifizierungstoken für jeden Domänenpartner in einer zweiten Liste von Partnerdomänen erzeugt;
die Netzwerkschnittstelle (202) für Folgendes:
Empfangen, von dem Inhaltsanbieter, eines zweiten Inhaltselements ausgewählt durch den Inhaltsanbieter basierend auf Daten von jeder Partnerdomäne in der zweiten Liste von Partnerdomänen;
Empfangen, von dem Inhaltsanbieter, eines zweiten Authentifizierungstokens für jeden Domänenpartner in der zweiten Liste von Partnerdomänen; und
die Prüfmaschine (212) zum Bestimmen, das zweite Inhaltselement nicht anzuzeigen, basierend darauf, dass der erste Authentifizierungstoken für jeden Domänenpartner in der zweiten Liste von Partnerdomänen nicht einem jeweiligen der zweiten Authentifizierungstoken für jeden Domänenpartner in der zweiten Liste von Partnerdomänen zugeordnet ist.

5. System nach einem vorhergehenden Anspruch, wobei der Verschlüsseler (214) konfiguriert ist, um die partnerspezifische Kennung zu erzeugen, indem ein kryptografischer Hash einer Client-Vorrichtungskennung und ein Domänenname der entsprechenden Partnerdomäne berechnet wird, und wobei optional die Client-Vorrichtungskennung für jede der Partnerdomänen in der Liste von Partnerdomänen eindeutig ist.

6. System nach einem vorhergehenden Anspruch, wobei zum Verschlüsseln der domänenspezifischen Partnerkennung der Verschlüsseler (214) für Folgendes konfiguriert ist:
Erzeugen einer Zeichenfolge durch Verketten von zumindest der domänenspezifischen Partnerkennung, dem ersten Authentifizierungstoken und einem Zeitstempel; und
Verschlüsseln der Zeichenkette.

7. System nach einem vorhergehenden Anspruch, wobei der Verschlüsseler (214) konfiguriert ist, um die domänenspezifische Partnerkennung basierend darauf zu erzeugen, dass die Partnerdomäne nicht in einer schwarzen Liste aufgeführt ist, oder wobei der Verschlüsseler konfiguriert ist, um die domänenspezifische Partnerkennung basierend darauf zu erzeugen, dass eine Beitragsbewertung der Partnerdomäne über einem vorbestimmten Schwellenwert ist.

8. Verfahren zum Steuern des Datenaustauschs, umfassend:
Empfangen, durch eine Client-Vorrichtung (100) von einem Inhaltsanbieter (102), einer Liste von Partnerdomänen;
für jede Partnerdomäne in der Liste von Partnerdomänen:
Erzeugen (304), durch die Client-Vorrichtung, einer domänenspezifischen Partnerkennung; und
Verschlüsseln (304), durch die Client-Vorrichtung, der domänenspezifischen Partnerkennung und eines ersten Authentifizierungstokens unter Verwendung eines Verschlüsselungsschlüssels der entsprechenden Partnerdomäne;
Übertragen (306), durch die Client-Vorrichtung an den Inhaltsanbieter, der verschlüsselten domänenspezifischen Partnerkennungen und der verschlüsselten ersten Authentifizierungstoken für jede Partnerdomäne in der Liste von Partnerdomänen;
Empfangen (316), durch die Client-Vorrichtung von dem Inhaltsanbieter, eines Inhaltselements ausgewählt von dem Inhaltsanbieter basierend auf Daten von jeder Partnerdomäne in der Liste von Partnerdomänen, wobei die Daten von jeder Partnerdomäne in der Liste von Partnerdomänen basierend auf dem Empfangen der verschlüsselten domänenspezifischen Partnerkennung ausgewählt werden;
Empfangen (316), durch die Client-Vorrichtung von dem Inhaltsanbieter, eines zweiten Authentifizierungstokens für jede Partnerdomäne in der Liste von Partnerdomänen; und
Anzeigen (318), durch die Client-Vorrichtung, des Inhaltselements basierend auf einer Authentifizierung des zweiten Authentifizierungstokens für jede Partnerdomäne in der Liste von Partnerdomänen.

9. Verfahren nach Anspruch 8, wobei das Anzeigen des Inhaltselements basierend auf dem Vergleich ferner das Zuordnen jedes der ersten Authentifizierungstoken für jede Partnerdomäne in der Liste von Partnerdomänen zu einem der zweiten Authentifizierungstoken für jede Partnerdomäne in der Liste von Partnerdomänen umfasst.

10. Verfahren nach Anspruch 8 oder 9, ferner umfassend:
Empfangen, durch die Client-Vorrichtung (100), einer zweiten Partnerdomäne;
Bestimmen, durch die Client-Vorrichtung, einer Beitragsbewertung für die zweite Partnerdomäne, wobei die Beitragsbewertung eine Beitragshöhe beim Auswählen eines zweiten Inhaltselements angibt; und
Bestimmen, durch die Client-Vorrichtung, keine domänenspezifische Partnerkennung für die zweite Partnerdomäne zu erzeugen, basierend darauf, dass die Beitragsbewertung kleiner als ein vorbestimmter Schwellenwert ist, und wobei optional die Beitragsbewertung eine Beitragshöhe beim Auswählen eines oder mehrerer vorheriger Inhaltselemente angibt.

11. Verfahren nach einem der Ansprüche 8 bis 10, ferner umfassend:
Empfangen, durch die Client-Vorrichtung (100), einer zweiten Liste von Partnerdomänen;
Erzeugen, durch die Client-Vorrichtung, eines ersten Authentifizierungstokens für jeden Domänenpartner in der zweiten Liste von Partnerdomänen;
Empfangen, durch die Client-Vorrichtung von dem Inhaltsanbieter (102), eines zweiten Inhaltselements, das durch den Inhaltsanbieter basierend auf Daten von jeder Partnerdomäne in der zweiten Liste von Partnerdomänen ausgewählt wird;
Empfangen, durch die Client-Vorrichtung von dem Inhaltsanbieter, eines zweiten Authentifizierungstokens für jeden Domänenpartner in der zweiten Liste von Partnerdomänen; und
Bestimmen, durch die Client-Vorrichtung, das zweite Inhaltselement nicht anzuzeigen, basierend darauf, dass der erste Authentifizierungstoken für jeden Domänenpartner in der zweiten Liste von Partnerdomänen nicht einem jeweiligen der zweiten Authentifizierungstoken für jeden Domänenpartner in der zweiten Liste von Partnerdomänen zugeordnet ist.

12. Verfahren nach einem der Ansprüche 8 bis 11, wobei das Erzeugen der partnerspezifischen Kennung das Berechnen eines kryptografischen Hashs einer Client-Vorrichtungskennung und eines Domänennamens der entsprechenden Partnerdomäne umfasst, und wobei optional die Client-Vorrichtungskennung für jede der Partnerdomänen in der Liste von Partnerdomänen eindeutig ist.

13. Verfahren nach einem der Ansprüche 8 bis 12, wobei das Verschlüsseln der domänenspezifischen Partnerkennung Folgendes umfasst:
Erzeugen einer Zeichenkette durch Verketten von zumindest der domänenspezifischen Partnerkennung, dem ersten Authentifizierungstoken und einem Zeitstempel; und
Verschlüsseln der Zeichenkette.

14. Verfahren nach einem der Ansprüche 8 bis 13, ferner umfassend das Erzeugen der domänenspezifischen Partnerkennung basierend darauf, dass die Partnerdomäne nicht in einer schwarzen Liste aufgeführt ist.

15. Verfahren nach einem der Ansprüche 8 bis 14, ferner umfassend das Erzeugen der domänenspezifischen Partnerkennung basierend darauf, dass eine Beitragsbewertung der Partnerdomäne über einem vorbestimmten Schwellenwert ist.

## Revendications

1. Système pour contrôler l'échange de données, comprenant :
un fournisseur de contenu (102) ;
un crypteur (214) pour, pour chaque domaine partenaire dans une liste de domaines partenaires :
générer un identifiant spécifique au domaine partenaire ; et
crypter l'identifiant spécifique au domaine partenaire et un premier jeton d'authentification à l'aide d'une clé de cryptage du domaine partenaire correspondant ;
une interface réseau (202) pour :
transmettre au fournisseur de contenu les identifiants cryptés spécifiques au domaine partenaire et les premiers jetons d'authentification cryptés pour chaque domaine partenaire dans la liste des domaines partenaires ;
recevoir, du fournisseur de contenu, un élément de contenu sélectionné par le fournisseur de contenu sur la base des données de chaque domaine partenaire dans la liste de domaines partenaires,
dans lequel les données de chaque domaine partenaire dans la liste de domaines partenaires sont sélectionnées sur la base de la réception de l'identifiant crypté spécifique au domaine partenaire ;
recevoir, du fournisseur de contenu, un deuxième jeton d'authentification pour chaque domaine partenaire dans la liste de domaines partenaires ; et
un moteur d'audit (212) pour déterminer d'afficher l'élément de contenu sur la base d'une comparaison du premier jeton d'authentification pour chaque domaine partenaire dans la liste de domaines partenaires et du deuxième jeton d'authentification pour chaque domaine partenaire dans la liste de domaines partenaires.

2. Système selon la revendication 1, dans lequel le moteur d'audit (212) déterminant d'afficher l'élément de contenu sur la base de la comparaison comprend en outre la mise en correspondance de chacun des premiers jetons d'authentification pour chaque domaine partenaire dans la liste de domaines partenaires avec l'un des deuxièmes jetons d'authentification pour chaque domaine partenaire dans la liste de domaines partenaires.

3. Système selon la revendication 1 ou 2, comprenant en outre le moteur d'audit (212) pour :
déterminer un score de contribution pour un deuxième domaine partenaire, dans lequel le score de contribution indique un niveau de contribution lors de la sélection d'un deuxième élément de contenu ; et
déterminer de ne pas générer d'identifiant spécifique au domaine partenaire pour le deuxième domaine partenaire sur la base du score de contribution étant inférieur à un seuil prédéterminé, et facultativement dans lequel le score de contribution indique un niveau de contribution dans la sélection d'un ou plusieurs éléments de contenu antérieurs.

4. Système selon l'une quelconque des revendications précédentes, comprenant en outre :
le crypteur (214) pour générer un premier jeton d'authentification pour chaque partenaire de domaine dans une deuxième liste de domaines partenaires ;
l'interface réseau (202)pour :
recevoir, du fournisseur de contenu, un deuxième élément de contenu sélectionné par le fournisseur de contenu sur la base des données de chaque domaine partenaire dans la deuxième liste de domaines partenaires ;
recevoir, du fournisseur de contenu, un deuxième jeton d'authentification pour chaque partenaire de domaine dans la deuxième liste de domaines partenaires ; et
le moteur d'audit (212) pour déterminer de ne pas afficher le deuxième élément de contenu sur la base de la non-correspondance du premier jeton d'authentification pour chaque partenaire de domaine dans la deuxième liste de domaines partenaires avec l'un respectif du deuxième jeton d'authentification pour chaque partenaire de domaine dans la deuxième liste de domaines partenaires.

5. Système selon l'une quelconque des revendications précédentes, dans lequel le crypteur (214) est configuré pour générer l'identifiant spécifique au partenaire en calculant un hachage cryptographique d'un identifiant de dispositif client et d'un nom de domaine du domaine partenaire correspondant, et facultativement dans lequel l'identifiant de dispositif client est unique pour chacun des domaines partenaires dans la liste de domaines partenaires.

6. Système selon l'une quelconque des revendications précédentes, dans lequel pour crypter l'identifiant spécifique au domaine partenaire, le crypteur (214) est configuré pour :
générer une chaîne de caractères en concaténant au moins l'identifiant spécifique au domaine partenaire, le premier jeton d'authentification et un horodatage ; et
crypter la chaîne de caractères.

7. Système selon l'une quelconque des revendications précédentes, dans lequel le crypteur (214) est configuré pour générer l'identifiant spécifique au domaine partenaire sur la base du domaine partenaire n'étant pas répertorié dans une liste noire, ou dans lequel le crypteur est configuré pour générer l'identifiant spécifique au domaine partenaire sur la base d'un score de contribution du domaine partenaire étant supérieur à un seuil prédéterminé.

8. Procédé pour contrôler l'échange de données, comprenant :
la réception, par un dispositif client (100) depuis un fournisseur de contenu (102), d'une liste de domaines partenaires ;
pour chaque domaine partenaire de la liste de domaines partenaires :
la génération (304), par le dispositif client, d'un identifiant spécifique au domaine partenaire ; et
le cryptage (304), par le dispositif client, de l'identifiant spécifique au domaine partenaire et d'un premier jeton d'authentification à l'aide d'une clé de cryptage du domaine partenaire correspondant ;
la transmission (306), par le dispositif client au fournisseur de contenu, des identifiants cryptés spécifiques au domaine partenaire et des premiers jetons d'authentification cryptés pour chaque domaine partenaire dans la liste de domaines partenaires ;
la réception (316), par le dispositif client du fournisseur de contenu, d'un élément de contenu sélectionné par le fournisseur de contenu sur la base des données de chaque domaine partenaire dans la liste de domaines partenaires, dans lequel les données de chaque domaine partenaire dans la liste de domaines partenaires sont sélectionnées sur la base de la réception de l'identifiant crypté spécifique au domaine partenaire ;
la réception (316), par le dispositif client en provenance du fournisseur de contenu, d'un deuxième jeton d'authentification pour chaque domaine partenaire dans la liste de domaines partenaires ; et
l'affichage (318), par le dispositif client, de l'élément de contenu sur la base d'une authentification du deuxième jeton d'authentification pour chaque domaine partenaire dans la liste de domaines partenaires.

9. Procédé selon la revendication 8, dans lequel l'affichage de l'élément de contenu sur la base de la comparaison comprend en outre la mise en correspondance de chacun des premiers jetons d'authentification pour chaque domaine partenaire dans la liste de domaines partenaires avec l'un des deuxièmes jetons d'authentification pour chaque domaine partenaire dans la liste de domaines partenaires.

10. Procédé selon la revendication 8 ou 9, comprenant en outre :
la réception, par le dispositif client (100), d'un deuxième domaine partenaire ;
la détermination, par le dispositif client, d'un score de contribution pour le deuxième domaine partenaire, dans lequel le score de contribution indique un niveau de contribution lors de la sélection d'un deuxième élément de contenu ; et
la détermination, par le dispositif client, de ne pas générer d'identifiant spécifique au domaine partenaire pour le deuxième domaine partenaire sur la base du score de contribution étant inférieur à un seuil prédéterminé, et facultativement dans lequel le score de contribution indique un niveau de contribution dans la sélection d'un ou plusieurs éléments de contenu.

11. Procédé selon l'une quelconque des revendications 8 à 10, comprenant en outre :
la réception, par le dispositif client (100), d'une deuxième liste de domaines partenaires ;
la génération, par le dispositif client, d'un premier jeton d'authentification pour chaque domaine partenaire dans la deuxième liste de domaines partenaires ;
la réception, par le dispositif client en provenance du fournisseur de contenu (102), d'un deuxième élément de contenu sélectionné par le fournisseur de contenu sur la base des données de chaque domaine partenaire dans la deuxième liste de domaines partenaires ;
la réception, par le dispositif client en provenance du fournisseur de contenu, d'un deuxième jeton d'authentification pour chaque partenaire de domaine dans la deuxième liste de domaines partenaires ; et
la détermination, par le dispositif client, de ne pas afficher le deuxième élément de contenu sur la base de la non mise en correspondance du premier jeton d'authentification pour chaque partenaire de domaine dans la deuxième liste de domaines partenaires avec l'un respectif du deuxième jeton d'authentification pour chaque partenaire de domaine dans la deuxième liste de domaines partenaires.

12. Procédé selon l'une quelconque des revendications 8 à 11, dans lequel la génération de l'identifiant spécifique au partenaire comprend le calcul d'un hachage cryptographique d'un identifiant de dispositif client et d'un nom de domaine du domaine partenaire correspondant, et facultativement dans lequel l'identifiant de dispositif client est unique pour chacun des domaines partenaires dans la liste de domaines partenaires.

13. Procédé selon l'une quelconque des revendications 8 à 12, dans lequel le cryptage de l'identifiant spécifique au domaine partenaire comprend :
la génération d'une chaîne de caractères en concaténant au moins l'identifiant spécifique au domaine partenaire, le premier jeton d'authentification et un horodatage ; et
le cryptage de la chaîne de caractères.

14. Procédé selon l'une quelconque des revendications 8 à 13, comprenant en outre la génération de l'identifiant spécifique au domaine partenaire sur la base du domaine partenaire n'étant pas répertorié dans une liste noire.

15. Procédé selon l'une quelconque des revendications 8 à 14, comprenant en outre la génération de l'identifiant spécifique au domaine partenaire sur la base d'un score de contribution du domaine partenaire étant supérieur à un seuil prédéterminé.
